# FASCICULE DE BREVET EUROPEEN

(11) **EP 4 360 948 B1**
(45) Date de publication et mention de la délivrance du brevet: **31.12.2025**
(21) Numéro de dépôt: 23206093.9
(22) Date de dépôt: 26.10.2023
(51) Int. Cl.: B60N 2/70, B60N 2/00, B60N 2/56, B60N 2/427, B60N 2/90

(54) **NAPPE DE SUSPENSION D'ÉLÉMENT DE SUPPORT DE SIÈGE DE VÉHICULE**
AUFHÄNGUNGSMATTE FÜR EIN STÜTZELEMENT EINES FAHRZEUGSITZES
VEHICLE SEAT SUPPORT MEMBER SUSPENSION MAT

(30) Priorité: 28.10.2022 FR 2211272
(43) Date de publication de la demande: 01.05.2024
(73) Titulaire: Faurecia Sièges d'Automobile, 92000 Nanterre (FR)
(72) Inventeur: FITZPATRICK, Robert, Holland 49423 (US); DURIEZ, Didier, 91220 Le Plessis-Pâté (FR); DUBOULET, Claude, 91580 Etrechy (FR)
(74) Mandataire: Novagraaf Group

(56) Documents cités:
- EP-A1- 2 829 434
- DE-B- 1 092 322
- US-A- 2 119 023
- US-A1- 2020 039 399

## Description

La présente invention concerne une nappe de suspension d'un élément de support de siège de véhicule.

L'invention concerne également un élément de support de siège comprenant une telle nappe de suspension.

Il est connu de prévoir une nappe de suspension dans un élément de support de siège de véhicule, tel que le dossier du siège, contre laquelle est appliquée la matelassure de l'élément de support afin d'améliorer le confort d'un occupant du siège. Une telle nappe de suspension est généralement formée d'une pluralité de tiges métalliques tendues dans l'armature du dossier. Le document US 2 119 023 décrit une nappe de suspension conforme au préambule de la revendication 1. Le document DE 1 092 322 décrit également une nappe de suspension pour un élément de support de siège.

En outre, il est connu de prévoir une pluralité de circuits électriques dans l'élément de support afin d'implémenter différentes fonctions dans ou sur l'élément de support. Ainsi, l'élément de support peut par exemple comprendre un élément chauffant ou vibrant pour améliorer le confort d'un occupant du siège, un dispositif de commande d'un coussin gonflable de sécurité, divers capteurs et indicateurs lumineux, etc. Les documents EP 2 829 434 et US 2020/039399 décrivent l'intégration d'un circuit électrique à une nappe de supsension.

L'assemblage d'un tel élément de support est cependant complexe en nécessitant l'assemblage des différents éléments constitutifs de l'élément de support les uns après les autres.

Pour simplifier cet assemblage, il est connu de surmouler certains composants avec la matelassure, mais un tel procédé reste complexe et n'est pas adapté à tous les composants du siège. En outre, la nappe de suspension doit toujours être assemblée sur l'armature indépendamment du reste de l'élément de support.

L'un des buts de l'invention est de pallier ces inconvénients en proposant une nappe de support de structure simplifiée et pouvant intégrer d'autres fonctions d'un élément de support de siège de véhicule.

A cet effet, l'invention concerne une nappe de suspension d'un élément de support de siège de véhicule, comprenant une toile en matériau plastique s'étendant entre une première face et une deuxième face et comprenant au moins une première couche en matériau plastique, comprenant une face externe formant la première face et une face interne opposée à la face externe, et une deuxième couche en matériau plastique comprenant une face externe formant la deuxième face et une face interne opposée à la face externe, les faces internes de la première couche et de la deuxième couche étant appliquées l'une contre l'autre, au moins un circuit électrique, comprenant au moins un composant électrique et une piste d'alimentation dudit composant, s'étendant entre une partie des faces internes de la première couche et de la deuxième couche.

Ainsi, la nappe de suspension, au lieu d'être formée d'une pluralité de tiges indépendantes, est formée par des couches en matériau plastiques assemblées, ce qui permet de monter la nappe de suspension d'une seule pièce sur l'armature et d'intégrer des composants électriques dans la nappe de suspension afin de simplifier encore le montage de l'élément de support dans lequel la nappe de suspension est prévue.

La nappe de suspension selon l'invention peut en outre comprendre l'une ou plusieurs des caractéristiques suivantes, considérées isolément ou selon toute combinaison techniquement envisageable :
- le circuit électrique est imprimé sur la face interne de la première couche ;
- la première couche et le circuit électrique forment une carte de circuit imprimé souple ;
- le circuit électrique est réalisé en un matériau métallique conducteur ;
- le circuit électrique comprend au moins une borne de connexion connectée électriquement à la piste d'alimentation, ladite borne de connexion débouchant à l'extérieur de la toile en matériau plastique ;
- la toile en matériau plastique s'étend entre au moins deux éléments de montage rigides fixés à des bords opposés de la toile en matériau plastique, ladite toile étant tendue entre lesdits éléments de montage lorsque la nappe de suspension est montée dans un élément de support de siège ;
- les éléments de montage comprennent chacun au moins un élément de fixation de la nappe de suspension à une armature d'un élément de support de siège ;
- une pluralité de circuits électriques s'étendent entre une partie des faces internes de la première couche et de la deuxième couche, chaque circuit électrique comprenant au moins un composant électrique et au moins une piste d'alimentation dudit composant ;
- le composant électrique est choisi parmi un élément de chauffage, une source de lumière, un élément vibrant, un capteur, un dispositif de commande d'un coussin de sécurité gonflable, un élément de connexion d'un composant électrique extérieur.

Selon un autre aspect, l'invention concerne également un élément de support de siège, de véhicule comprenant une armature définissant un cadre, une nappe de suspension telle que décrite ci-dessus fixée au cadre et s'étendant dans celui-ci et une matelassure s'étendant sur l'armature et la nappe de suspension, ladite matelassure étant appliquée contre ladite nappe de suspension.

D'autres aspects et avantages de l'invention apparaîtront à la lecture de la description qui suit, donnée à titre d'exemple et faite en référence aux dessins annexés, dans lesquels :
[Fig 1] - la Fig. 1 est une représentation schématique en perspective d'une partie d'un élément de support de siège, comprenant une nappe de suspension selon l'invention,
[Fig 2] - la Fig. 2 est une représentation schématique en perspective d'une nappe de suspension selon l'invention,
[Fig 3] - la Fig. 3 est une représentation schématique en perspective éclatée d'une partie de la nappe de suspension de la Fig. 2, et
[Fig 4] - la Fig. 4 est une représentation schématique en perspective d'un détail de la nappe de suspension de la Fig. 2.

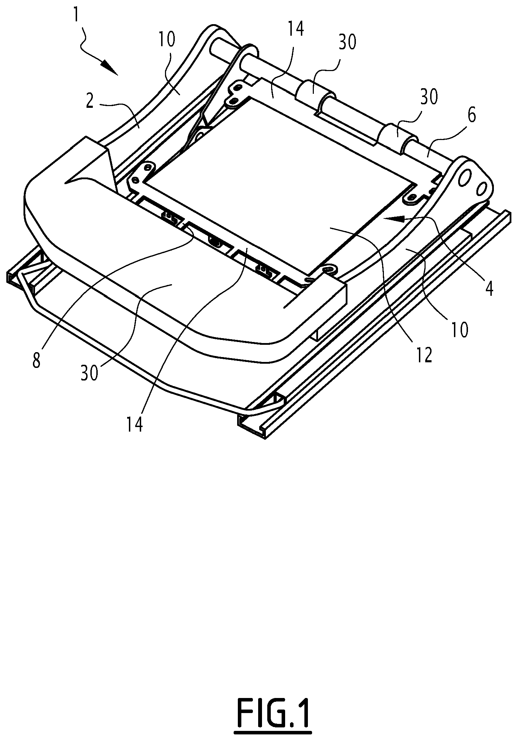

En référence à la Fig. 1, on décrit un élément de support 1 de siège de véhicule, comprenant une armature 2, une nappe de suspension 4 fixée à et s'étendant dans l'armature 2 et une matelassure (non représentée) s'étendant sur l'armature 2 et la nappe de suspension 4 et appliquée contre la nappe de suspension 4. Un tel élément de support 1 forme par exemple un dossier de siège de véhicule. Il est cependant entendu que l'élément de support peut former une autre partie du siège, telle que l'assise ou l'appui-tête du siège. On notera que, dans la Fig. 1, le dossier a été représenté dans une position repliée afin d'améliorer la visibilité de la fixation entre l'armature 2 et la nappe de suspension 4. Il est entendu qu'en utilisation normale, le dossier est dans une position redressée, dans laquelle un occupant du siège peut prendre appui contre le dossier.

Dans le cas d'un dossier, de façon classique, l'armature 2 forme un cadre délimité par une traverse inférieure 6, une traverse supérieure 8 et deux montants 10 reliant les traverse inférieure 6 et supérieure 8.

La nappe de suspension 4 s'étend dans le cadre formé par l'armature 2 et est fixée à la traverse inférieure 6 d'une part et à la traverse supérieure 8 d'autre part. Il est entendu qu'en variante ou en supplément, la nappe de suspension 4 peut être fixée aux deux montants 10. Comme représenté sur la Fig. 1, La nappe de suspension 4 occupe la majorité de l'espace à l'intérieur du cadre, voire tout l'espace à l'intérieur du cadre, afin d'offrir une grande surface de support pour la matelassure et le dos de l'occupant du siège dans le cas d'un dossier de siège. La nappe de suspension 4 présente des caractéristiques mécaniques lui permettant de remplir sa fonction de suspension, offrant à la fois un support et un amortissement lorsqu'un utilisateur prend appui sur la surface d'appui formée par la matelassure. Ainsi, la nappe de suspension 4 présente des caractéristiques similaires, en termes de rigidité et d'élasticité, à ce qui est obtenu lorsqu'une pluralité de tiges métalliques sont tendues dans l'armature du dossier. Ainsi, la nappe de suspension 4 est souple et déformable élastiquement dans une certaine mesure. A cet effet, la nappe de suspension 4 est par exemple sensiblement tendue entre les traverses inférieure 6 et supérieure 8 et/ou les montants 10.

La nappe de suspension 4 comprend une toile en matériau plastique 12 s'étendant entre au moins deux éléments de montage 14 fixés à des bords opposés de la toile 12. La toile 12 confère à la nappe de suspension 4 ses caractéristiques mécaniques décrites ci-dessus et les éléments de montage 14 permettent la fixation de la nappe de suspension 4 sur l'armature 2. La toile 12 présente à peu de chose près les dimensions de la nappe de suspension 4 et occupe donc la majeure partie de l'espace dans le cadre.

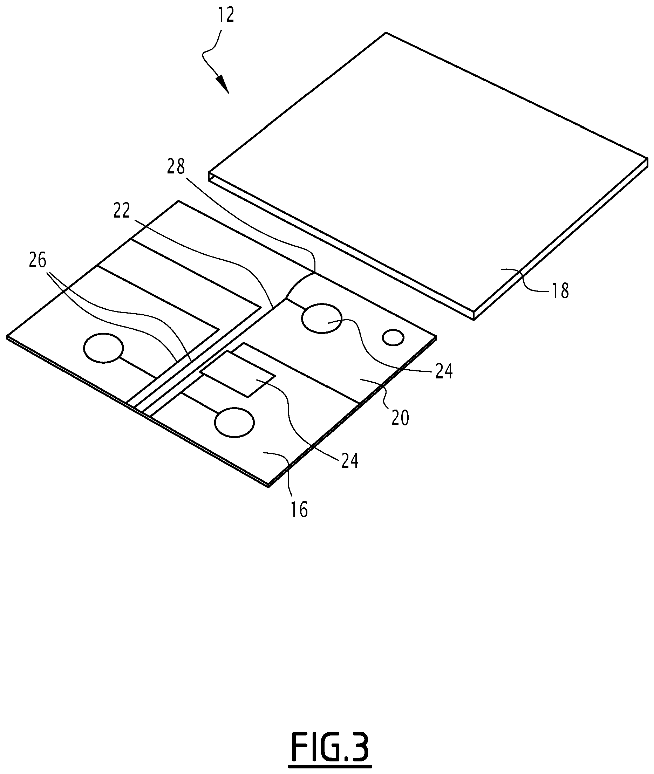

La toile 12 s'étend entre une première face et une deuxième face, dont l'une est tournée vers la matelassure et l'autre est tournée vers le dos de l'élément de support. Comme plus particulièrement visible sur la Fig. 3, la toile en matériau plastique 12 comprend une première couche en matériau plastique 16 et une deuxième couche en matériau plastique 18 appliquée l'une contre l'autre pour former la toile 12. La première couche en matériau plastique 16 et la deuxième couche en matériau plastique 18 sont par exemple formées par des feuilles en matériau plastique. Les première et deuxième couches 16, 18 présentent sensiblement les mêmes dimensions, qui sont également les dimensions de la toile 12. Les caractéristiques mécaniques de la toile 12 sont choisies pour que la toile 12 puisse réaliser la fonction de nappe de suspension d'un élément de support de siège. De telles caractéristiques peuvent être obtenues en choisissant le matériau plastique utilisé pour réaliser les première et deuxième couches 16, 18, et/ou en prévoyant une épaisseur adaptée pour la toile 12.

La première couche en matériau plastique 16 s'étend entre une face externe, formant la première face de la toile 12, et une face interne 20, opposée à la face externe et tournée vers la deuxième couche en matériau plastique 18. Au moins un circuit électrique 22 s'étend sur une partie de la face interne 20 de la première couche en matériau plastique 16. Le circuit électrique 22 comprend au moins un composant électrique 24, réalisant une fonction particulière, et au moins une piste d'alimentation 26 permettant d'amener un courant électrique et/ou des signaux de commande au composant électrique 24.

Le composant électrique 24 peut être de toute nature adaptée pour réaliser une fonction dans ou sur l'élément de support 1 ou autour de celui-ci. Ainsi, le composant électrique 24 est par exemple choisi parmi un élément de chauffage, une source de lumière, un élément vibrant, un capteur, un dispositif de commande d'un coussin de sécurité gonflable, un élément de connexion d'un composant électrique extérieur ou autre. On notera que dans le cas d'un élément de connexion, c'est connexion se fait par exemple au travers de la première couche en matériau plastique 16 ou de la deuxième couche en matériau plastique 18, par exemple en prévoyant une ouverture dans cette couche en regard de l'élément de connexion puisque le composant électrique 24 s'étend à l'intérieur de la toile 12. En variante, le composant électrique 24 peut comprendre une partie, telle qu'une interface de connexion, débouchant à l'extérieur de la toile 12, par exemple à la périphérie de la toile 12. Il est entendu que cette liste n'est pas exhaustive et que d'autres composants électriques 24 peuvent être envisagés.

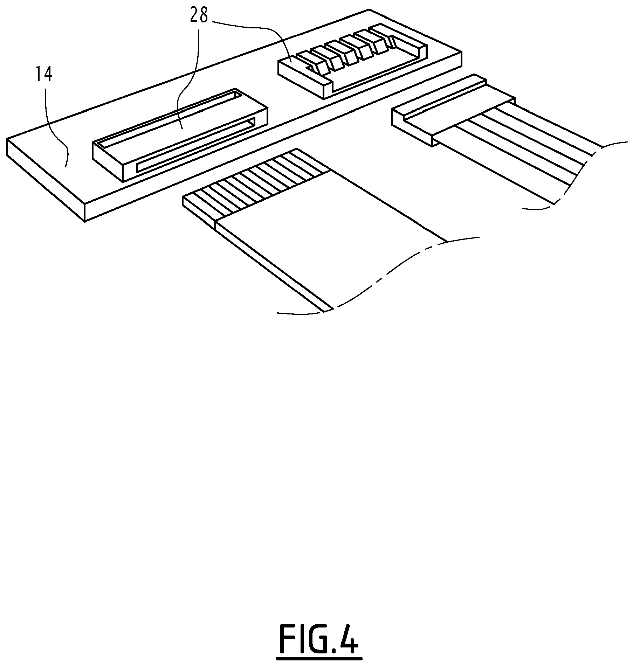

La piste d'alimentation 26 s'étend du composant électrique 24 à une borne de connexion 28 permettant de connecter le circuit électrique 22 à une source d'alimentation et/ou à un dispositif de commande du circuit électrique 22. La borne de connexion 28 débouche à l'extérieur de la toile 12, par exemple à la périphérie de celle-ci entre la première couche 16 et la deuxième couche 18. Selon un mode de réalisation, la borne de connexion 18 est fixée sur l'un des éléments de montage 14. Un exemple de bornes de connexion 28 est représenté sur la Fig. 4, ces bornes de connexion 28 pouvant être connectées différents types de composants électriques extérieurs, tels qu'un bus de communication ou une alimentation, afin de connecter le circuit électrique 22 au système électrique du véhicule par exemple.

Selon un mode de réalisation particulièrement avantageux, le circuit électrique 22 est imprimé sur la face interne 20 de la première couche en matériau plastique 16, ce qui permet de réaliser la toile 12 de façon particulièrement simple, en imprimant le circuit électrique 22 sur la face interne 20 de la première couche en matériau plastique 16 puis en assemblant, par exemple par collage la première couche en matériau plastique 16 et la deuxième couche en matériau plastique 18 en appliquant la face interne de la deuxième couche en matériau plastique 18 sur la face interne 20 de la première couche en matériau plastique 16. L'impression du circuit électrique 22 se fait par exemple en utilisant une encre métallique conductrice pour réaliser des pistes sur la face interne 20 de la première couche en matériau plastique 16.

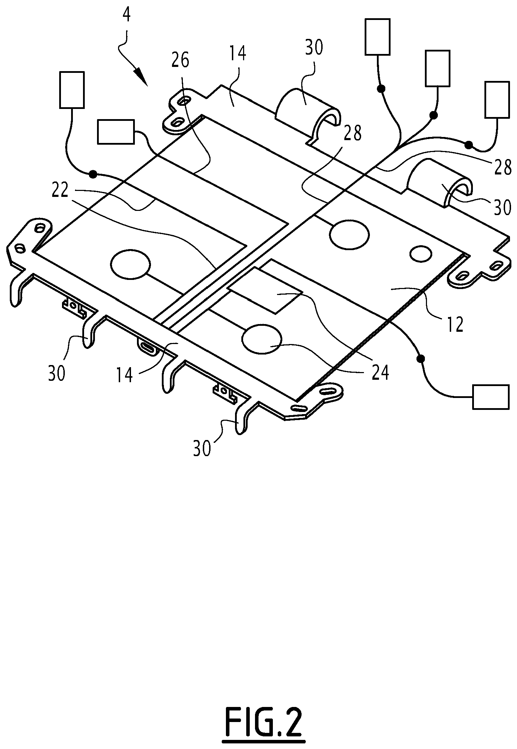

Comme représenté sur les Figs. 2 et 3, la toile 22 peut comprendre plusieurs circuits électriques 22 afin de permettre à la toile 22 de réaliser diverses fonctions, notamment parmi celles décrites précédemment, en intégrant une pluralité de composants électriques 24 dans la toile 12. Tous les circuits électriques 22 s'étendent sur la face interne 20 de la première couche en matériau plastique et sont par exemple réalisés simultanément par impression. Il est également entendu qu'un circuit électrique 22 peut comprendre plusieurs composants électriques 24 connectés les uns aux autres par des pistes d'alimentation 26. Sur la Fig. 2, on a représenté de façon schématique les diverses connexions extérieures des circuits électriques 22 autour de la toile 12. Il est cependant entendu qu'avantageusement, les bornes de connexion 28 de tout ou partie des circuits électriques sont réunies en un seul emplacement de la nappe de suspension 4, par exemple sur l'un des éléments de montage 14, afin de simplifier les opérations de connexion des circuits électriques 22 au système électrique du véhicule, comme représenté sur la Fig. 4.

Selon un mode de réalisation particulièrement avantageux, au moins la première couche en matériau plastique 16 et le ou les circuits électriques 22 prévus sur celle-ci sont réalisés en utilisant une carte de circuit imprimé souple, connue sous la désignation anglaise de « Flexible Circuit Board » (FCB). Selon un mode de réalisation, la FCB intègre également la deuxième couche en matériau plastique 18 ou cette deuxième couche en matériau plastique 18 est elle-même réalisée sous la forme d'une FCB. Ainsi, la deuxième couche en matériau plastique peut également comprendre au moins un circuit électrique s'étendant sur sa face en regard de la face interne 20 de la première couche en matériau plastique.

On notera que la première couche en matériau plastique 16 comprenant au moins un circuit électrique 22 peut s'étendre du côté interne de l'élément de support, c'est-à-dire que la première face de la toile 12 forme la face interne de la nappe de suspension 4 tournée vers la surface d'appui de l'élément de support sur laquelle un occupant du siège prend appui, ou du côté externe de l'élément de support, c'est-à-dire que la première face de la toile 12 forme la face externe de la nappe de suspension 4, opposée à la face interne et tournée vers le dos de l'élément de support. Lorsque la première face de la toile 12 forme la face interne, alors la face externe de la deuxième couche en matériau plastique 18, définissant la deuxième face de la toile 12, forme la face externe de la nappe de suspension 4 et inversement, lorsque la première face de la toile 12 forme la face externe, alors la face externe de la deuxième couche en matériau plastique 18 forme la face externe de la nappe de suspension 4.

Les éléments de montage 14 de la nappe de suspension 4 s'étendent par exemple le long de deux bords opposés de la toile 12 afin de permettre la fixation de la nappe de suspension 4 à deux branches opposées du cadre formé par l'armature 2. Selon le mode de réalisation représenté sur la Fig. 1 et comme indiqué précédemment, les éléments de montage 14 permettent par exemple la fixation de la nappe de suspension 4 sur la traverse inférieure 6 et sur la traverse supérieure 8 de l'armature 2. A cet effet, chaque élément de montage 14 comprend au moins un élément de fixation 30 à l'armature 2. Chaque élément de montage 14 comprend par exemple plusieurs éléments de fixation 30 répartis le long de l'élément de montage 14 et se présentant par exemple sous la forme de crochets s'accrochant autour des traverses de l'armature 2, comme plus particulièrement visible sur la Fig. 1. Il est entendu que des éléments de montage 14 supplémentaires peuvent être prévus, par exemple pour fixer la nappe de suspension 4 aux montants 10 de l'armature 2.

Les éléments de montage 14 sont fixés sur la toile 12 par exemple par surmoulage. Les éléments de montage 14 sont rigides et empêchent la toile 12 de se replier sur elle-même selon la direction dans laquelle s'étendent les éléments de montage 14. Tout ou partie des bornes de connexion 28 des circuits électriques sont par exemple réunies sur l'élément de montage 14 permettant la fixation de la nappe de suspension 4 à la traverse inférieure 6 de l'armature 2 afin de rapprocher ces bornes 28 du plancher du véhicule, ce qui facilite le raccordement de la nappe de suspension au système électrique du véhicule, qui passe généralement par le plancher du véhicule.

La nappe de suspension 4 décrite ci-dessus permet de faciliter et d'accélérer la réalisation d'un élément de support 1 et d'intégrer de façon simple un grand nombre de fonctionnalités dans l'élément de support 1 puisque tous les composants électriques 24 peuvent être réunis d'une seule pièce dans la toile 12 de la nappe de suspension 4, ce qui permet de les assembler en une seule fois dans l'élément de support 1. Il est cependant entendu que l'élément de support 1 peut comprendre un ou plusieurs circuits électriques supplémentaires non intégrés dans la nappe de suspension. La connexion des composants électriques 24 au système électrique du véhicule peut également être simplifiée en regroupant les bornes de connexion 28, par exemple sur l'un des éléments de montage 14.

## Revendications

1. Nappe de suspension (4) d'un élément de support (1) de siège de véhicule comprenant une toile (12) en matériau plastique s'étendant entre une première face et une deuxième face et comprenant au moins une première couche en matériau plastique (16), comprenant une face externe formant la première face et une face interne (20) opposée à la face externe, et une deuxième couche en matériau plastique (18) comprenant une face externe formant la deuxième face et une face interne opposée à la face externe, les faces internes (20) de la première couche (16) et de la deuxième couche (18) étant appliquées l'une contre l'autre, ladite nappe de suspension (4) étant **caractérisée en ce qu'**elle comprend au moins un circuit électrique (22), comprenant au moins un composant électrique (24) et une piste d'alimentation (26) dudit composant (24), s'étendant entre une partie des faces internes (20) de la première couche (16) et de la deuxième couche (18).

2. Nappe de suspension selon la revendication 1, dans laquelle le circuit électrique (22) est imprimé sur la face interne (20) de la première couche (16).

3. Nappe de suspension selon la revendication 2, dans laquelle la première couche (16) et le circuit électrique (22) forment une carte de circuit imprimé souple.

4. Nappe de suspension selon la revendication 1 ou 2, dans laquelle le circuit électrique (22) est réalisé en un matériau métallique conducteur.

5. Nappe de suspension selon l'une quelconque des revendications 1 à 3, dans laquelle le circuit électrique (22) comprend au moins une borne de connexion (28) connectée électriquement à la piste d'alimentation (26), ladite borne de connexion débouchant à l'extérieur de la toile (12) en matériau plastique.

6. Nappe de suspension selon l'une quelconque des revendications 1 à 4, dans laquelle la toile (12) en matériau plastique s'étend entre au moins deux éléments de montage (14) rigides fixés à des bords opposés de la toile (12) en matériau plastique, ladite toile (12) étant tendue entre lesdits éléments de montage (14) lorsque la nappe de suspension (4) est montée dans un élément de support (1) de siège.

7. Nappe de suspension selon la revendication 6, dans laquelle les éléments de montage (14) comprennent chacun au moins un élément de fixation (30) de la nappe de suspension (4) à une armature (2) d'un élément de support (1) de siège.

8. Nappe de suspension selon l'une quelconque des revendications 1 à 7, dans laquelle une pluralité de circuits électriques (22) s'étendent entre une partie des faces internes (20) de la première couche (16) et de la deuxième couche (18), chaque circuit électrique (22) comprenant au moins un composant électrique (24) et au moins une piste d'alimentation (26) dudit composant (24).

9. Nappe de suspension selon l'une quelconque des revendications 1 à 8, dans laquelle le composant électrique (24) est choisi parmi un élément de chauffage, une source de lumière, un élément vibrant, un capteur, un dispositif de commande d'un coussin de sécurité gonflable, un élément de connexion d'un composant électrique extérieur.

10. Elément de support de siège de véhicule comprenant une armature (2) définissant un cadre, une nappe de suspension (4) selon l'une quelconque des revendications 1 à 9 fixée au cadre et s'étendant dans celui-ci et une matelassure s'étendant sur l'armature (2) et la nappe de suspension (4), ladite matelassure étant appliquée contre ladite nappe de suspension (4).

## Patentansprüche

1. Aufhängungsmembran (4) eines Fahrzeugsitzstützelements (1), umfassend ein Gewebe (12) aus Kunststoffmaterial, das sich zwischen einer ersten Fläche und einer zweiten Fläche erstreckt und mindestens eine erste Schicht hergestellt aus Kunststoffmaterial (16) mit einer die erste Fläche bildenden Außenfläche und einer der Außenfläche gegenüberliegenden Innenfläche (20) sowie eine zweite Schicht hergestellt aus Kunststoffmaterial (18) mit einer die zweite Fläche bildenden Außenfläche und einer der Außenfläche gegenüberliegenden Innenfläche umfasst, wobei die Innenflächen (20) der ersten Schicht (16) und der zweiten Schicht (18) aufeinander aufgebracht sind, wobei die Aufhängungsmembran (4) **dadurch gekennzeichnet ist, dass** sie mindestens einen elektrischen Schaltkreis (22) umfasst, der mindestens eine elektrische Komponente (24) und eine Stromzuleitung (26) für diese Komponente (24) umfasst, der sich zwischen einem Teil der Innenflächen (20) der ersten Schicht (16) und der zweiten Schicht (18) erstreckt.

2. Aufhängungsmembran nach Anspruch 1, wobei der elektrische Schaltkreis (22) auf der Innenfläche (20) der ersten Schicht (16) aufgedruckt ist.

3. Aufhängungsmembran nach Anspruch 2, wobei die erste Schicht (16) und der elektrische Schaltkreis (22) eine flexible Leiterplatte bilden.

4. Aufhängungsmembran nach Anspruch 1 oder Anspruch 2, wobei der elektrische Stromkreis (22) aus einem leitfähigen Metallmaterial besteht.

5. Aufhängungsmembran nach einem der Ansprüche 1 bis 3, wobei der elektrische Stromkreis (22) mindestens einen Verbindungsanschluss (28) umfasst, der elektrisch mit der Stromzuleitung (26) verbunden ist, wobei der Verbindungsanschluss aus dem aus Kunststoffmaterial bestehenden Gewebe (12) heraustritt.

6. Aufhängungsmembran nach einem der Ansprüche 1 bis 4, wobei sich das Gewebe (12) aus Kunststoffmaterial zwischen mindestens zwei starren Befestigungselementen (14) erstreckt, die an gegenüberliegenden Kanten des Gewebes (12) aus Kunststoffmaterial befestigt sind, wobei das Gewebe (12) zwischen den Befestigungselementen (14) straff gespannt ist, wenn die Aufhängungsmembran (4) in einem Sitzstützelement (1) montiert ist.

7. Aufhängungsmembran nach Anspruch 6, wobei die Befestigungselemente (14) jeweils mindestens ein Element (30) zum Anbringen der Aufhängungsmembran (4) an einer Armatur (2) eines Sitzstützelements (1) umfassen.

8. Aufhängungsmembran nach einem der Ansprüche 1 bis 7, wobei sich eine Vielzahl von elektrischen Schaltkreisen (22) zwischen einem Teil der Innenflächen (20) der ersten Schicht (16) und der zweiten Schicht (18) erstreckt, wobei jeder elektrische Schaltkreis (22) mindestens eine elektrische Komponente (24) und mindestens eine Stromzuleitung (26) für diese Komponente (24) umfasst.

9. Aufhängungsmembran nach einem der Ansprüche 1 bis 8, wobei die elektrische Komponente (24) ausgewählt ist aus einem Heizelement, einer Lichtquelle, einem Vibrationselement, einem Sensor, einer Vorrichtung zur Steuerung eines Airbags, einem Element zum Anschluss einer externen elektrischen Komponente.

10. Fahrzeugsitzstützelement, umfassend eine Armatur (2), die einen Rahmen definiert, eine Aufhängungsmembran (4) nach einem der Ansprüche 1 bis 9, die an dem Rahmen befestigt ist und sich in diesen hinein erstreckt, und eine Polsterung, die sich über die Armatur (2) und die Aufhängungsmembran (4) erstreckt, wobei die Polsterung auf die Aufhängungsmembran (4) aufgebracht ist.

## Claims

1. Suspension membrane (4) of a vehicle seat support element (1), comprising a fabric (12) made of plastics material extending between a first face and a second face and comprising at least a first layer made of plastics material (16), comprising an outer face forming the first face and an inner face (20) opposite the outer face, and a second layer made of plastics material (18) comprising an outer face forming the second face and an inner face opposite the outer face, the inner faces (20) of the first layer (16) and of the second layer (18) being applied against one another, said suspension membrane (4) being **characterized in that** it comprises at least one electrical circuit (22), comprising at least one electrical component (24) and a power lead (26) for said component (24), extending between a part of the inner faces (20) of the first layer (16) and of the second layer (18).

2. Suspension membrane according to claim 1, wherein the electrical circuit (22) is printed on the inner face (20) of the first layer (16).

3. Suspension membrane according to claim 2, wherein the first layer (16) and the electrical circuit (22) form a flexible printed circuit board.

4. Suspension membrane according to either claim 1 or claim 2, wherein the electrical circuit (22) is made of a conductive metal material.

5. Suspension membrane according to any of claims 1 to 3, wherein the electrical circuit (22) comprises at least one connection terminal (28) electrically connected to the power lead (26), said connection terminal emerging outside the fabric (12) made of plastics material.

6. Suspension membrane according to any of claims 1 to 4, wherein the fabric (12) made of plastics material extends between at least two rigid mounting elements (14) attached to opposite edges of the fabric (12) made of plastics material, said fabric (12) being taut between said mounting elements (14) when the suspension membrane (4) is mounted in a seat support element (1).

7. Suspension membrane according to claim 6, wherein the mounting elements (14) each comprise at least one element (30) for attaching the suspension membrane (4) to an armature (2) of a seat support element (1).

8. Suspension membrane according to any of claims 1 to 7, wherein a plurality of electrical circuits (22) extend between part of the inner faces (20) of the first layer (16) and of the second layer (18), each electrical circuit (22) comprising at least one electrical component (24) and at least one power lead (26) for said component (24).

9. Suspension membrane according to any of claims 1 to 8, wherein the electrical component (24) is selected from a heating element, a light source, a vibrating element, a sensor, a device for controlling an airbag, an element for connecting an external electrical component.

10. Vehicle seat support element comprising an armature (2) defining a frame, a suspension membrane (4) according to any of claims 1 to 9 attached to and extending into the frame, and a padding extending over the armature (2) and the suspension membrane (4), said padding being applied against said suspension membrane (4).
